# FASCICULE DE BREVET EUROPEEN

(11) **EP 3 288 670 B1**
(45) Date de publication et mention de la délivrance du brevet: **25.11.2020**
(21) Numéro de dépôt: 16722316.3
(22) Date de dépôt: 27.04.2016
(51) Int. Cl.: B01D 67/00, B01D 71/10, B32B 23/02, D21F 9/00, D21F 11/14, F26B 5/14, F26B 13/28, B32B 37/18, B32B 37/20, B32B 37/22, B32B 38/16, D21F 5/04, D21F 11/04, D21F 9/02, D21H 11/18, D21H 27/30, F26B 13/08

(54) **PROCEDE ET DISPOSITIF DE FABRICATION D'UN MATERIAU STRATIFIE COMPRENANT UNE COUCHE DE CELLULOSE FIBRILLEE**
VERFAHREN UND VORRICHTUNG ZUR HERSTELLUNG EINES LAMINIERTEN MATERIALS MIT FIBRILLIERTER CELLULOSESCHICHT
PROCESS AND DEVICE FOR MANUFACTURING A LAMINATED MATERIAL COMPRISING A FIBRILLATED CELLULOSE LAYER

(30) Priorité: 28.04.2015 FR 1553818
(43) Date de publication de la demande: 07.03.2018
(73) Titulaire: Centre Technique Du Papier, 38610 Gieres (FR); Centre National de la Recherche Scientifique (CNRS), 75016 Paris (FR)
(72) Inventeur: GUERIN, David, 63400 Chamaliere (FR); RHARBI, Yahia, 38600 Fontaine (FR); HUBER, Patrick, 38570 Le Cheylas (FR); MEYER, Valérie, 38400 Saint Martin D'heres (FR)
(74) Mandataire: Regimbeau
(86) Numéro de dépôt international: PCT/FR2016/050986
(87) Numéro de publication internationale: WO 2016/174348

(56) Documents cités:
- EP-A1- 2 532 782
- WO-A2-2013/171373

## Description

### DOMAINE DE L'INVENTION

La présente invention concerne un procédé de fabrication d'un matériau stratifié comprenant une couche de cellulose fibrillée, ainsi qu'un dispositif de fabrication d'un tel matériau.

### ARRIERE PLAN DE L'INVENTION

Les matériaux stratifiés comprenant un substrat et une couche de cellulose fibrillée présentent un intérêt particulier car la couche de cellulose fibrillée procure au substrat des propriétés barrière, utiles notamment dans l'emballage.

Quatre types de procédés sont connus pour fabriquer de tels matériaux.

Un premier procédé, dit par voie papetière, consiste à déposer sur une toile une suspension très diluée (c'est-à-dire présentant une concentration inférieure à 5% en poids) de cellulose puis à pulvériser une suspension très diluée de cellulose fibrillée de sorte à obtenir, après drainage au travers de ladite toile, un matelas fibreux humide stratifié présentant une concentration de l'ordre de 20% en poids de cellulose, la couche de cellulose fibrillée ayant une concentration inférieure. L'utilisation de la pulvérisation, compte tenu de la vitesse de la machine, ne permet pas d'atteindre une épaisseur élevée de la couche de cellulose fibrillée une fois séchée, l'épaisseur étant généralement inférieure à 3-5µm.

Un second procédé, utilisé pour la fabrication des cartons, consiste à déposer sur une toile une suspension très diluée de cellulose et, sur une toile adjacente, une suspension très diluée de cellulose fibrillée ; un drainage est exercé à travers chacune des toiles pour obtenir un matelas fibreux présentant une concentration de 10 à 15% en poids de cellulose, puis les deux matelas sont assemblés. Ce procédé ne permet pas d'atteindre une épaisseur faible de la couche de cellulose fibrillée une fois séchée, l'épaisseur de la couche de cellulose fibrillée étant généralement supérieure à 15-20µm.

Le drainage d'une suspension de cellulose fibrillée à travers une toile est décrit dans le document WO 2013/171373.

Dans ces deux procédés, la teneur en eau du matelas fibreux stratifié est réduite au moyen d'une presse parfois chauffante. Un problème associé à cette technique est que la couche de cellulose fibrillée adhère à la surface de la presse, ce qui rend la mise en oeuvre malaisée. Par ailleurs, un tel matelas humide est difficile à déshydrater.

Un troisième procédé, dit d'enduction/couchage, consiste à étaler une suspension de cellulose fibrillée sur le substrat de sorte à former une couche humide qui est séchée par rayonnement infrarouge (gaz ou électrique), convection (air chaud) ou conduction (au contact d'un cylindre sécheur). Toutefois, pour une concentration de l'ordre de 2% en poids de cellulose fibrillée, la suspension a la consistance d'un gel qui est difficile à étaler. Pour faciliter la mise en oeuvre de cette suspension, il faudrait diminuer la concentration en cellulose fibrillée en augmentant la quantité d'eau. Cependant, cette augmentation de la teneur en eau dégrade les propriétés du substrat fibreux, rend difficile le séchage de la couche de cellulose fibrillée et rend difficile l'atteinte d'une épaisseur de couche suffisante pour montrer une amélioration de performance.

Un quatrième procédé consiste à fabriquer un film autoporté de cellulose fibrillée, comme décrit dans le document WO 2013/060934 puis à le coller par lamination à un matelas fibreux sec déjà fabriqué. Ce procédé ne permet pas d'atteindre des épaisseurs faibles de la couche de cellulose fibrillée (inférieure à 15µm), car les films minces de cellulose fibrillée présentent une fragilité qui rend leur manipulation difficile. D'autre part, cette technique nécessite l'utilisation d'une colle pour faire adhérer le film autoporté de cellulose fibrillée au matelas fibreux. Le matériau stratifié ainsi obtenu comprend donc une couche de colle.

Par ailleurs, il n'est pas connu à l'heure actuelle de procédé permettant de fabriquer un stratifié comprenant une couche de cellulose fibrillée très fine (par exemple de l'ordre de 3 à 20 µm), qui soit également continue et homogène.

### BREVE DESCRIPTION DE L'INVENTION

Un but de l'invention est de remédier aux inconvénients précités et de concevoir un procédé de fabrication d'un matériau stratifié qui soit plus simple à mettre en oeuvre et qui permette en particulier de réaliser une couche homogène de cellulose fibrillée, déposée en une seule opération, plus épaisse que les procédés connus, en minimisant les besoins de séchage.

Conformément à l'invention, il est proposé un procédé de fabrication d'un matériau stratifié comprenant une couche de cellulose fibrillée, caractérisé en ce qu'il comprend les étapes suivantes :
(a) le dépôt d'une suspension de cellulose fibrillée sur une membrane de filtration et le drainage de ladite suspension au travers de la membrane de sorte à former une couche humide de cellulose fibrillée présentant une siccité, c'est-à-dire un rapport entre la masse de matière sèche et la masse totale de la couche de cellulose fibrillée, comprise entre 5 et 18%,
(b) le report sous pression de ladite couche humide sur une surface au moins partiellement hydrophile d'un substrat, de sorte à former ledit matériau stratifié,
(c) le séchage dudit matériau stratifié.

Par « cellulose fibrillée », on entend de la cellulose transformée au minimum à 50% en fibrilles de diamètre nanométrique.

Par « surface au moins partiellement hydrophile », on entend une surface présentant des interactions non dispersives de type acide base de Lewis telles que définies dans la théorie de van Oss, Chaudhury et Good telle que décrite dans l'ouvrage de [Darque-Ceretti et Felder] non nulles. En pratique, une telle surface présente un angle de contact entre une goutte d'eau et le substrat inférieur à 90°, l'angle de contact étant l'angle entre la tangente à la goutte au point de contact avec le substrat.

Selon un mode de réalisation, la concentration en cellulose fibrillée de la suspension mise en oeuvre à l'étape (a) est comprise entre 0,5 et 2% en poids.

De manière préférée, la siccité de la couche humide de cellulose fibrillée formée à l'étape (a) est comprise entre 7 et 15%.

De manière particulièrement avantageuse, la siccité de la couche de cellulose fibrillée dans le stratifié à l'issue de l'étape (c) est comprise entre 80% et 99%.

Selon d'autres caractéristiques avantageuses de l'invention, considérées seules ou en combinaison :
- la couche humide de cellulose fibrillée à l'issue de l'étape (a) présente une épaisseur comprise entre 20 µm et 750 µm,
- la couche humide de de cellulose fibrillée à l'issue de l'étape (b) présente une épaisseur comprise entre 15 µm et 500 µm.
- la couche de cellulose fibrillée à l'issue de l'étape (c) présente une épaisseur comprise entre 3 µm et 100 µm.

Selon une forme d'exécution de l'invention, le substrat est un papier ou un carton.

De manière particulièrement avantageuse, dans l'étape (b), la couche humide de cellulose fibrillée adhère au substrat par contact direct avec la surface au moins partiellement hydrophile dudit substrat.

Selon un mode de réalisation, le substrat est entraîné en défilement et la couche humide de cellulose fibrillée est reportée sur ledit substrat de manière continue.

Selon un autre mode de réalisation, la couche de cellulose fibrillée est reportée de manière discontinue sur le substrat dans l'étape (b).

Un autre objet de l'invention concerne un dispositif de fabrication d'un matériau stratifié comprenant une couche de cellulose fibrillée. Ledit dispositif comprend :
- une unité de fabrication d'une couche humide de cellulose fibrillée, comprenant un dispositif de dépôt d'une suspension de cellulose fibrillée sur une membrane de filtration et des moyens de drainage de ladite suspension au travers de la membrane de sorte à former une couche humide de cellulose fibrillée présentant une siccité comprise entre 5 et 18%,
- une unité de report sous pression de la couche humide de cellulose fibrillée en sortie de l'unité de fabrication sur un substrat de sorte à former un matériau stratifié,
- une unité de séchage dudit matériau stratifié en sortie de l'unité de report.

### BREVE DESCRIPTION DES DESSINS

D'autres caractéristiques et avantages de l'invention ressortiront de la description détaillée qui va suivre, en référence aux dessins annexés sur lesquels :
- la figure 1 est une vue schématique d'une installation permettant la mise en oeuvre d'un mode de réalisation du procédé de fabrication du matériau stratifié, dans lequel la couche humide de cellulose fibrillée est entièrement reportée sur un substrat en défilement,
- la figure 2 est une vue schématique d'une installation pour la fabrication du matériau stratifié selon un autre mode de réalisation, dans lequel la couche humide de cellulose fibrillée est reportée localement sur un substrat en défilement,
- la figure 3 est une vue schématique d'une installation pour la fabrication d'un matériau fibrillé selon un autre mode de réalisation, dans lequel la couche humide de cellulose fibrillée est découpée pour y prélever des portions de couche reportées successivement sur une pluralité de substrats distincts.

### DESCRIPTION DETAILLEE DE L'INVENTION

La cellulose fibrillée est un nanomatériau hétérogène composé d'éléments de taille micrométriques (fragments de fibres) et d'au moins 50% en nombre de nano-objets (c'est-à-dire des objets dont au moins une des dimensions se situe entre 1 et 100 nanomètres). Ces nano-objets cellulosiques sont appelés « micro-fibrilles » ou MFC (acronyme du terme anglo-saxon « Micro Fibrillated Cellulose ») ou « nano-fibrilles », NFC ou CNF (acronymes respectifs des termes anglo-saxons « Nano Fibrillated Cellulose » et « Cellulose Nanofiber »). Les micro- ou nano-fibrilles de cellulose présentent typiquement un diamètre de l'ordre de 20 à 60 nm et une longueur de 0,5 à 5 µm.

La formation de cellulose fibrillée à partir de fibres de cellulose est connue en tant que telle et ne sera donc pas décrite dans la suite du texte.

La cellulose fibrillée est typiquement fournie sous la forme d'une suspension aqueuse. Eventuellement, des additifs peuvent être incorporés à la suspension, par exemple des liants, des dispersants, des particules minérales, des oxydes métalliques, des agents plastifiants, rhéologiques, résistants à l'état sec ou humide, réticulants, antimicrobiens ou des fibres cellulosiques ou synthétiques ou encore des nanofils d'argent ou d'autres molécules qui seront, à l'issue du procédé, emprisonnées dans la couche de cellulose fibrillée.

La concentration de la suspension en cellulose fibrillée est typiquement comprise entre 0,1% et 4% en poids. De manière préférée, ladite concentration est comprise entre 0,6% et 2% en poids.

Dans une première étape du procédé, la suspension est déposée sous la forme d'une couche sur une membrane de filtration. Cette membrane présente une ouverture suffisamment grande pour favoriser l'élimination de l'eau par filtration tout en étant suffisamment faible pour favoriser la rétention de la cellulose fibrillée sur la membrane. Une toile tissée à faible ouverture (ouverture de maille 0µm, surface libre<10%), utilisée couramment dans le domaine de la filtration convient à cet usage. A titre purement indicatif, une toile commercialisée sous la référence SEFAR™ PETEX™ 07-1/2 convient à cet usage. La membrane peut également être une membrane synthétique.

Il se produit une filtration frontale au travers de la membrane, qui permet le drainage d'une partie de l'eau et par conséquent une certaine déshydratation de la couche de cellulose fibrillée. Cette étape de drainage est poursuivie jusqu'à l'obtention d'une siccité de la couche de cellulose fibrillée comprise entre 5 et 18%, de manière préférée entre 7 et 15% en poids. La siccité, qui correspond au rapport entre la masse de la matière sèche et la masse totale de la couche de cellulose fibrillée (c'est-à-dire la somme des masses de la matière sèche et de l'eau contenue dans la couche), peut être mesurée, de manière conventionnelle, au moyen d'une étuve ou d'une thermobalance.

Dans une telle gamme de siccité, la couche de cellulose fibrillée présente une cohésion suffisante pour pouvoir être manipulée. Par ailleurs, comme on le verra plus bas, cette gamme de siccité procure à la couche des propriétés avantageuses d'adhésion sur une surface au moins partiellement hydrophile.

A l'issue de cette étape, l'épaisseur de la couche humide de cellulose fibrillée est avantageusement comprise entre 20 et 750 µm, de manière préférée entre 30 et 200 µm.

La couche humide de cellulose fibrillée est alors reportée sur une surface au moins partiellement hydrophile d'un substrat présentant une siccité supérieure à 60%, et de manière préférée supérieure à 85% (ledit substrat étant alors considéré comme « sec ») et une pression est exercée pour favoriser un contact intime entre la couche humide de cellulose fibrillée et le substrat.

Dans les conditions de siccité susmentionnées, la couche humide de cellulose fibrillée se comporte comme un gel qui, grâce à ses propriétés de rétention d'eau, évite un mouillage excessif du substrat.

Selon un mode de réalisation, le procédé de fabrication du stratifié est continu, le substrat se présentant sous la forme d'une bande flexible entraînée en défilement.

Selon un autre mode de réalisation, le procédé de fabrication est discontinu, la couche humide étant reportée de manière séquentielle sur le substrat ou sur des pièces distinctes.

Le report est avantageusement réalisé dans des conditions permettant le contact intime et direct entre le substrat et la couche de cellulose fibrillée, c'est-à-dire en particulier: à une température comprise entre 20°C et 140°C, une durée jusqu'à 15 s, usuellement entre 10 ms et 1s ; une pression comprise entre 0,1 et 40MPa.

Les inventeurs ont découvert que dans la gamme de siccité mentionnée plus haut (5-18%, de préférence 7-15%), la couche humide de cellulose fibrillée adhère au substrat par contact direct avec la surface au moins partiellement hydrophile. Aucun matériau intermédiaire de collage n'est donc nécessaire pour assurer cette adhésion.

Le report est suivi d'un séchage du matériau stratifié, conduisant à une siccité finale de la couche de cellulose fibrillée comprise entre 80 et 99%, de préférence entre 88 et 95%. Le séchage peut être mis en oeuvre par tout moyen approprié, incluant notamment des moyens de séchage convectif (rouleau chauffant par exemple), radiatif (lampe à infrarouge par exemple), microonde ou convectif.

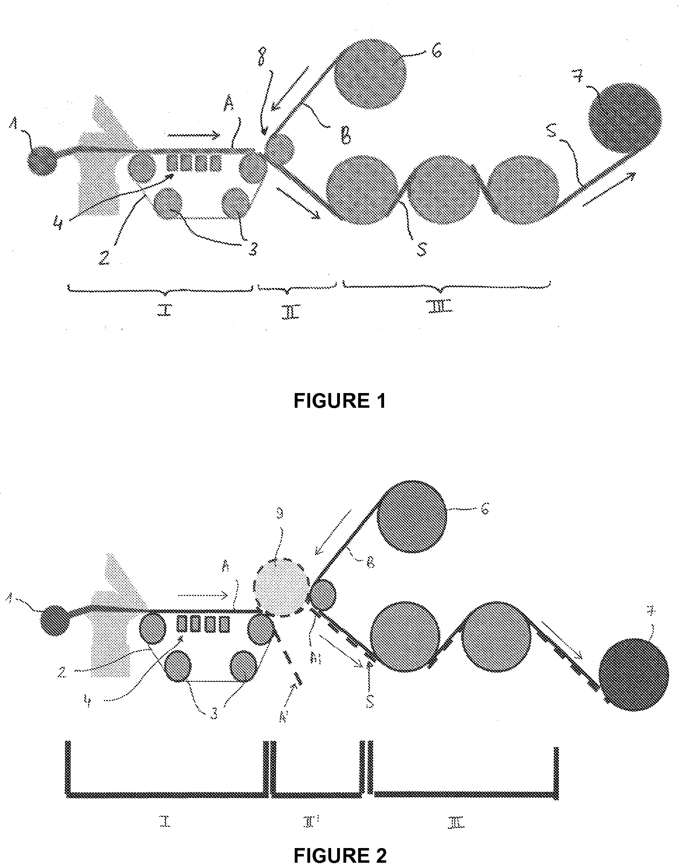

La figure 1 illustre un mode de réalisation d'une installation permettant de mettre en oeuvre le procédé décrit ci-dessus.

Cette installation comprend trois parties principales :
- la partie I comprend un système de formation de la couche humide de cellulose fibrillée ;
- la partie II comprend un système de report de la couche humide sur le substrat sec ;
- la partie III comprend un système de séchage du matériau stratifié formé dans la partie II.

Les flèches indiquent le sens de déplacement de la couche humide de cellulose fibrillée, du papier et du stratifié.

La partie I comprend un système de dépôt d'une suspension de cellulose fibrillée 1 sur une membrane filtrante 2. La membrane filtrante peut se présenter sous la forme d'une bande continue qui peut être entraînée par des rouleaux 3 au-dessus d'organes d'aspiration 4 qui favorisent le drainage au travers de la membrane filtrante. La partie I permet de former une couche humide de cellulose fibrillée A.

Dans le mode de réalisation illustré sur la figure 1, le substrat B se présente sous la forme d'une bobine de papier. Une bande de papier B est entraînée en défilement entre un dérouleur 6 et un enrouleur 7.

La partie I et la partie II sont accolées, de telle sorte que lorsque la couche humide A présente la siccité requise (entre 5 et 18%), ladite couche A puisse être appliquée sur le papier B au travers d'un laminoir 8.

Dans le cas où le substrat ne présente pas les mêmes propriétés sur chacune de ses faces, on fait en sorte que ce soit une surface au moins partiellement hydrophile du papier B qui est mise en contact avec la couche humide A. Ainsi, par contact direct entre la couche humide A et ladite surface au moins partiellement hydrophile, on obtient une bonne adhésion de la couche humide sur le substrat.

Dans la partie III, le stratifié S formé de la couche A et du substrat B est entraîné en défilement dans une atmosphère à température élevée en vue de sécher la couche humide. Les moyens utilisés dans la partie III sont des moyens conventionnellement utilisés dans une sécherie papetière ou une sécherie placée en sortie d'une machine d'enduction, et ne sont donc pas décrits en détail ici.

A la sortie de la partie III, le stratifié est enroulé par l'enrouleur 7 de sorte à former une bobine.

Naturellement, la figure 1 n'est donnée qu'à titre illustratif et non limitatif. En particulier, la fabrication du stratifié peut être réalisée par d'autres moyens que ceux schématisés sur la figure 1 sans pour autant sortir du cadre de la présente invention.

La figure 2 illustre ainsi une installation permettant la mise en oeuvre d'un autre mode de fabrication d'un stratifié selon l'invention.

Les parties I et III sont similaires à celles de la figure 1 et ne sont donc pas décrites à nouveau.

Comme sur la figure 1, le substrat B se présente sous la forme d'une bobine de papier. Une bande de papier B est entraînée en défilement entre un dérouleur 6 et un enrouleur 7.

La partie II' comprend un moyen de découpe de portions Aᵢ de la couche humide de cellulose fibrillée. Chacune desdites portions Ai est reportée sous pression, par exemple au moyen d'un rouleau 9, sur la bande de papier B en défilement. Les chutes A' résultant de cette découpe sont avantageusement récupérées afin d'être recyclées.

On forme ainsi une bande de papier dont seulement les régions sur lesquelles les portions Aᵢ de cellulose fibrillée ont été reportées sont stratifiées.

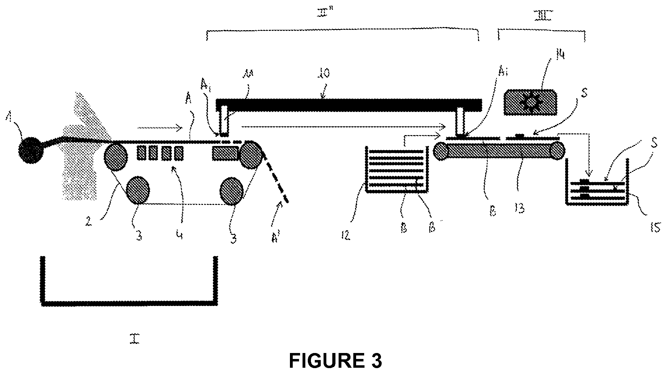

La figure 3 illustre une installation permettant la mise en oeuvre d'un autre mode de fabrication d'un stratifié selon l'invention, dans lequel le substrat n'est plus une bande de papier entraînée en défilement mais une pluralité de pièces unitaires.

La partie I est similaire à celle de la figure 1 et n'est donc pas décrite à nouveau.

Les substrats B sont fournis dans un conteneur 12 à partir duquel ils peuvent être prélevés successivement en vue de la fabrication d'un stratifié respectif.

L'installation comprend un dispositif II" de découpe et de transfert d'une portion de couche de cellulose fibrillée. Ce dispositif comprend un moyen de découpe 11, par exemple un emporte-pièce, qui prélève successivement dans la couche A une pluralité de portions Aᵢ et qui transfère, grâce à un système de mise en place 10, ladite portion Aᵢ au-dessus d'un tapis 13 sur lequel défilent des substrats B. Lors de la mise en place de la portion Aᵢ sur le substrat B, une pression est exercée par le moyen 11 pour favoriser l'adhésion.

La portion Aᵢ peut recouvrir toute la surface du substrat B ou, comme cela est schématisé sur la figure 3, recouvrir seulement une partie de la surface du substrat B. Dans ce dernier cas, le stratifié S est localisé sur la surface du substrat B.

Bien que représenté plan sur la figure 3, le substrat B peut présenter toute autre forme. Ainsi, dans le domaine de l'emballage, le substrat B peut par exemple être une barquette en carton. Dans ce cas, le report de la portion de couche humide de cellulose fibrillée est avantageusement réalisé au moyen d'une contre-forme complémentaire de celle du substrat.

L'installation comprend également un système III de séchage du stratifié. Ce système comprend, en regard du tapis 13, un séchoir 14 au-dessous duquel défilent les stratifiés.

En sortie du séchoir, les stratifiés S sont rangés dans un conteneur 15 en vue de leur transport et/ou de leur stockage.

Le matériau stratifié obtenu peut donner lieu à de multiples applications.

Le substrat peut être n'importe quel matériau de la famille des papiers, incluant les papiers et cartons pour impression-écriture, les papiers et cartons pour emballage, les papiers à usage sanitaire et domestique, les papiers et cartons de spécialité, les non tissés, etc.

Le substrat peut être constitué d'une unique couche ou d'un empilement de plusieurs couches.

La couche de cellulose fibrillée confère au stratifié des propriétés de surface améliorées qui peuvent être mises à profit en particulier dans des applications d'emballage (pour conférer des propriétés barrières au gaz ou aux liquides par exemple), dans des applications impression/écriture (pour immobiliser des encres ou des vernis à la surface et limiter leur pénétration dans le réseau fibreux du substrat) ou dans des applications de spécialité. Le matériau stratifié peut ainsi être utilisé dans le domaine du bâtiment, de l'énergie ou encore de l'électronique.

Par ailleurs, le complexe formé améliore les propriétés mécaniques du substrat grâce à la couche de cellulose fibrillée (notamment en termes de rigidité, résistance à la traction) et trouve donc avantageusement application dans toutes les sortes de papier.

Enfin, il va de soi que les exemples cités plus haut ne sont que des illustrations particulières en aucun cas limitatives quant aux domaines d'application de l'invention.

### REFERENCES

WO 2013/171373
WO 2013/060934
[Darque-Ceretti et Felder] : Adhésion et adhérence, Evelyne Darque-Ceretti, Eric Felder, Sciences et techniques de l'ingénieur, CNRS Editions, ISBN 2-271-06092-3, 2003, Chapitre 2.3.2.1 Décomposition du travail d'adhésion, pp. 97-99.

## Revendications

1. Procédé de fabrication d'un matériau stratifié (S) comprenant une couche de cellulose fibrillée, **caractérisé en ce qu'**il comprend les étapes suivantes :
(a) le dépôt d'une suspension (1) de cellulose fibrillée sur une membrane (2) de filtration et le drainage de ladite suspension au travers de la membrane de sorte à former une couche humide de cellulose fibrillée (A) présentant une siccité, c'est-à-dire un rapport entre la masse de matière sèche et la masse totale de la couche de cellulose fibrillée, comprise entre 5 et 18%,
(b) le report sous pression de ladite couche humide (A) sur une surface au moins partiellement hydrophile d'un substrat (B), de sorte à former ledit matériau stratifié (S),
(c) le séchage dudit matériau stratifié.

2. Procédé selon la revendication 1, dans lequel la concentration en cellulose fibrillée de la suspension est comprise entre 0,5 et 2% en poids.

3. Procédé selon l'une des revendications 1 ou 2, dans lequel la siccité de la couche humide de cellulose fibrillée formée à l'étape (a) est comprise entre 7 et 15%.

4. Procédé selon l'une des revendications 1 à 3, dans lequel la siccité de la couche de cellulose fibrillée dans le stratifié (S) à l'issue de l'étape (c) est comprise entre 80% et 99%.

5. Procédé selon l'une des revendications 1 à 4, dans lequel la couche humide de cellulose fibrillée à l'issue de l'étape (a) présente une épaisseur comprise entre 20 µm et 750 µm.

6. Procédé selon l'une des revendications 1 à 5, dans lequel la couche humide de cellulose fibrillée à l'issue de l'étape (b) présente une épaisseur comprise entre 15 µm et 500 µm.

7. Procédé selon l'une des revendications 1 à 6, dans lequel la couche de cellulose fibrillée à l'issue de l'étape (c) présente une épaisseur comprise entre 3 µm et 100 µm.

8. Procédé selon l'une des revendications 1 à 7, dans lequel le substrat (B) est un papier ou un carton.

9. Procédé selon l'une des revendications 1 à 8, dans lequel, dans l'étape (b), la couche humide de cellulose fibrillée (A) adhère au substrat (B) par contact direct avec la surface au moins partiellement hydrophile dudit substrat.

10. Procédé selon l'une des revendications 1 à 9, dans lequel le substrat est entraîné en défilement et la couche humide de cellulose fibrillée est reportée sur ledit substrat de manière continue.

11. Procédé selon l'une des revendications 1 à 9, dans lequel la couche de cellulose fibrillée est reportée de manière discontinue sur le substrat dans l'étape (b).

12. Dispositif de fabrication d'un matériau stratifié (S) comprenant une couche de cellulose fibrillée, **caractérisé en ce qu'**il comprend :
- une unité (I) de fabrication d'une couche humide de cellulose fibrillée, comprenant un dispositif de dépôt d'une suspension de cellulose fibrillée sur une membrane (2) de filtration et des moyens (4) de drainage de ladite suspension au travers de la membrane de sorte à former une couche humide de cellulose fibrillée (A) présentant une siccité, c'est-à-dire un rapport entre la masse de matière sèche et la masse totale de la couche de cellulose fibrillée, comprise entre 5 et 18%,
- une unité (II, II', II") de report sous pression de la couche humide de cellulose fibrillée en sortie de l'unité (I) de fabrication sur un substrat (B) de sorte à former un matériau stratifié (S),
- une unité (III) de séchage dudit matériau stratifié en sortie de l'unité (II) de report.

## Patentansprüche

1. Herstellungsverfahren eines Schichtmaterials (S), umfassend eine fibrillierte Zelluloseschicht, **dadurch gekennzeichnet, dass** sie die folgenden Schritte umfasst:
(a) das Aufbringen einer Suspension (1) aus fibrillierter Zellulose auf einer Filtrier- und Dränagemembran (2) der genannten Suspension durch die Membran derart, dass eine feuchte Schicht aus fibrillierter Zellulose (A) gebildet wird, die eine Trockenheit aufweist, d. h. ein Verhältnis zwischen der Masse aus Trockenmaterial und der Gesamtmasse der Schicht aus fibrillierter Zellulose, die zwischen 5 und 18 % inbegriffen ist,
(b) das Übertragen der genannten feuchten Schicht (A) unter Druck auf eine Oberfläche eines Substrats (B), die wenigstens teilweise hydrophil derart ist, dass das genannte Schichtmaterial (S) gebildet wird,
(c) Trocknen des genannten Schichtmaterials.

2. Verfahren gemäß Anspruch 1, bei dem die Konzentration an fibrillierter Zellulose der Suspension zwischen 0,5 und 2 Gew.-% inbegriffen ist.

3. Verfahren gemäß Anspruch 1 oder 2, bei dem die Trockenheit der feuchten Schicht aus fibrillierter Zellulose, die in Schritt (a) gebildet wird, zwischen 7 und 15 % inbegriffen ist.

4. Verfahren gemäß einem der Ansprüche 1 bis 3, bei dem die Trockenheit der Schicht aus fibrillierter Zellulose in dem Schichtmaterial (S) nach Abschluss des Schritts (c) zwischen 80 % und 99 % inbegriffen ist.

5. Verfahren gemäß einem der Ansprüche 1 bis 4, bei dem die feuchte Schicht aus fibrillierter Zellulose nach Abschluss des Schritts (a) eine zwischen 20 µm und 750 µm inbegriffene Dicke aufweist.

6. Verfahren gemäß einem der Ansprüche 1 bis 5, bei dem die feuchte Schicht aus fibrillierter Zellulose nach Abschluss des Schritts (b) eine zwischen 15 µm und 500 µm inbegriffene Dicke aufweist.

7. Verfahren gemäß einem der Ansprüche 1 bis 6, bei dem die Schicht aus fibrillierter Zellulose nach Abschluss des Schritts (c) eine zwischen 3 µm und 100 µm inbegriffene Dicke aufweist.

8. Verfahren gemäß einem der Ansprüche 1 bis 7, bei dem das Substrat (B) ein Papier oder ein Karton ist.

9. Verfahren gemäß einem der Ansprüche 1 bis 8, bei dem in Schritt (b) die feuchte Schicht aus fibrillierter Zellulose (A) an dem Substrat (B) per direktem Kontakt mit der teilweise hydrophilen Oberfläche des genannten Substrats anhaftet.

10. Verfahren gemäß einem der Ansprüche 1 bis 9, bei dem das Substrat in Bewegung angetrieben ist und die feuchte Schicht aus fibrillierter Zellulose auf dem genannten Substrat kontinuierlich versetzt wird.

11. Verfahren gemäß einem der Ansprüche 1 bis 9, bei dem die Schicht aus fibrillierter Zellulose auf dem Substrat in Schritt (b) unterbrochen versetzt wird.

12. Herstellungsvorrichtung eines Schichtmaterials (S), umfassend eine Schicht aus fibrillierter Zellulose, **dadurch gekennzeichnet, dass** es umfasst:
- eine Herstellungseinheit (I) einer feuchten Schicht aus fibrillierter Zellulose, umfassend eine Aufbringvorrichtung einer Suspension aus fibrillierter Zellulose auf einer Fibrillationsmembran (2) und Dränagemittel (4) der genannten Suspension durch die Membran derart, dass eine feuchte Schicht aus fibrillierter Zellulose (A) gebildet wird, die eine Trockenheit aufweist, d. h. ein zwischen 5 und 18 % inbegriffenes Verhältnis zwischen der Trockenmasse und der Gesamtmasse der Schicht aus fibrillierter Zellulose,
- eine Übertragungseinheit (II, II', II') der feuchten Schicht aus fibrillierter Zellulose unter Druck am Ausgang der Herstellungseinheit (I) auf einem Substrat (B) derart, dass ein Schichtmaterial (S) gebildet wird,
- eine Trocknungseinheit (III) des genannten Schichtmaterials am Ausgang der Versetzungseinheit (II).

## Claims

1. A process for manufacturing a laminated material (S) comprising a layer of fibrillated cellulose, **characterized in that** it comprises the following steps:
(a) depositing a suspension (1) of fibrillated cellulose on a filtering membrane (2) and draining said suspension through the membrane to form a wet layer of fibrillated cellulose (A) having dryness, i.e. ratio between the mass of dry matter and the total mass of the layer of fibrillated cellulose, of between 5 and 18%,
(b) transferring said wet layer (A) under pressure onto an at least partly hydrophilic surface of a substrate (B), to form said laminated material (S),
(c) drying said laminated material.

2. The process according to claim 1, wherein the concentration of fibrillated cellulose in the suspension is between 0.5 and 2% by weight.

3. The process according to one of claims 1 or 2, wherein the dryness of the wet layer of fibrillated cellulose formed at step (a) is between 7 and 15%.

4. The process according to one of claims 1 to 3, wherein the dryness of the layer of fibrillated cellulose in the laminated material (S) obtained after step (c) is between 80% and 99%.

5. The process according to one of claims 1 to 4, wherein the wet layer of fibrillated cellulose obtained after step (a) has a thickness of between 20 µm and 750 µm.

6. The process according to one of claims 1 to 5, wherein the wet layer of fibrillated cellulose obtained after step (b) has a thickness of between 15 µm and 500 µm.

7. The process according to one of claims 1 to 6, wherein the layer of fibrillated cellulose obtained after step (c) has a thickness of between 3 µm and 100 µm.

8. The process according to one of claims 1 to 7, wherein substrate (B) is paper or cardboard.

9. The process according to one of claims 1 to 8, wherein at step (b), the wet layer of fibrillated cellulose (A) adheres to substrate (B) via direct contact with the at least partly hydrophilic surface of said substrate.

10. The process according to one of claims 1 to 9, wherein the substrate is driven in movement and the wet layer of fibrillated cellulose is continuously transferred onto said substrate.

11. The process according to one of claims 1 to 9, wherein the layer of fibrillated cellulose is discontinuously transferred onto the substrate at step (b).

12. A device for manufacturing a laminated material (S) comprising a layer of fibrillated cellulose, **characterized in that** it comprises:
- a manufacturing unit (I) to manufacture a wet layer of fibrillated cellulose, comprising a device to deposit a suspension of fibrillated cellulose on a filtering membrane (2), and means (4) for draining said suspension through the membrane so as to form a wet layer of fibrillated cellulose (A) having dryness, i.e. ratio between the mass of dry matter and the total mass of the layer of fibrillated cellulose, of between 5 and 18%,
- a transfer unit (II, II', II') to transfer under pressure the wet layer of fibrillated cellulose leaving the manufacturing unit (I) onto a substrate (B) to form a laminated material (S),
- a drying unit (III) to dry said laminated material leaving the transfer unit (II).
